# EUROPÄISCHE PATENTSCHRIFT

(11) **EP 1 660 297 B1**
(45) Veröffentlichungstag und Bekanntmachung des Hinweises auf die Patenterteilung: **03.07.2013**
(21) Anmeldenummer: 03770912.8
(22) Anmeldetag: 15.10.2003
(51) Int. Cl.: B29C 47/70, B29C 47/28, B29C 47/26, B29C 47/06, B29C 47/00

(54) **DÜSENKOPF FÜR EINEN EXTRUDER**
NOZZLE HEAD FOR AN EXTRUDER
TETE DE TUYERE DESTINEE A UN EXTRUDEUR

(30) Priorität: 13.08.2003 WO PCT/DE03/02733
(43) Veröffentlichungstag der Anmeldung: 31.05.2006
(73) Patentinhaber: Rübbelke, Ingo, 33129 Delbrück (DE)
(72) Erfinder: Rübbelke, Ingo, 33129 Delbrück (DE)
(74) Vertreter: Ostermann, Thomas
(86) Internationale Anmeldenummer: PCT/DE2003/003445
(87) Internationale Veröffentlichungsnummer: WO 2005/016627

(56) Entgegenhaltungen:
- DE-A- 1 810 237
- DE-A- 19 923 973
- GB-A- 987 809
- US-A- 3 099 860
- US-A- 4 395 221
- US-A- 4 731 216

## Beschreibung

Die Erfindung betrifft Düsenkopf für einen Extruder nach dem Oberbegriff des Patentanspruchs 1.

Aus der DE 199 23 973 A1 ist ein Düsenkopf für einen Extruder bekannt, der im Wesentlichen aus einem äußeren Mantel und einem inneren zylinderförmigen Dorn gebildet ist. Der Mantel sowie der Dorn sind segmentiert ausgebildet und weisen jeweils Einsatzelemente auf zur Führung der an einer Eintrittsseite einströmenden Schmelze durch einen zentralen Ringkanal, der in einen Düsenspalt an einer Austrittsseite des Düsenkopfes übergeht. Die Schmelze wird innerhalb des Düsenkopfes im Wesentlichen wendelförmig geführt, bevor sie durch einen Düsenspalt unter Druck in axialer Richtung austritt.

Aus der GB 987 809 A ist ein Düsenkopf für einen Extruder bekannt, der einen zylinderförmigen Dorn, einen ringförmigen Düsenspalt sowie Verteilelemente zur Verteilung der Schmelze in einem in den Düsenspalt übergehenden zentralen Ringkanal auf. Nachteilig an dem bekannten Düsenkopf ist, dass die Verstellelemente über einen externen Elektromotor in Verdrehung versetzt werden müssen, was den Aufwand erhöht.

Aus der DE 18 10 237 A ist ein Düsenkopf für einen Extruder bekannt, der ein Verteilelement zur Verteilung der über einen Anströmkanal zugeführten Schmelze in einen zentralen Ringkanal ermöglicht. Das Verteilelement wird infolge der Schmelzeanströmung in Verdrehung um eine Längsachse eines zentralen mitlaufenden Dorns versetzt.

Aufgabe der vorliegenden Erfindung ist es, einen Düsenkopf für einen Extruder derart weiterzubilden, dass eine verbesserte Homogenität der Schmelze sowie ein bindenaht- und fließmarkierungsfreies Extrudat erzielt werden kann.

zur Lösung dieser Aufgabe weist die Erfindung die Merkmale des Patentanspruches 1 auf.

Der besondere Vorteil der Erfindung besteht darin, dass eine verbesserte Schmelzehomogenität sowie bindenahtfreie Extrudate erzielt wird, wobei eine intensive Durchmischung der Schmelze erfolgt. Überraschender Weise hat sich gezeigt, dass sich ein Verteilelement durch tangential zu seinem Umfang ausgerichtete Schmelzströme infolge von Schleppwirkung der an dem Verteilelement wandhaftenden Schmelze in Verdrehung versetzen lässt. Nach der Erfindung weist das Verteilelement eine Mehrzahl von Lamellen und zwischen denselben angeordneten Durchlässen auf, die derart geneigt angeordnet sind, dass die aus der Materialentspannung an den zu dem inneren Kreissegment zugewandten Durchlassaustritten resultierenden Kraftwirkungen ein Schubdrehmoment erzeugen. In günstiger Weise summieren sich das äußere Schleppdrehmoment und das innere Schubdrehmoment zu einem Gesamtdrehmoment. Vorteilhaft kann hierdurch das erforderliche Drehmoment aufgebracht werden, um die Reibwiderstände zu überwinden und das Verteilelement in Rotation zu versetzen, und zwar um die Symmetrieachse des Dorns. Nach der Erfindung erstreckt sich mindestens ein Anströmkanal in tangentialer Richtung auf einen Umfangsabschnitt des Verteilelementes. Durch die tangentiale Anströmung des Verteilelementes insbesondere durch Teilschmelzströme kann in günstiger Weise ein Antriebsdrehmoment zur Verdrehung des Kreisringelementes erzeugt werden.

Nach einer Weiterbildung der Erfindung kann das Verteilelement kreisringförmig ausgebildet sein. Es kommen jedoch auch Vielecke in Frage, die vorzugsweise zumindest eine an einen Ring angenäherte Umfangsfläche aufweisen.

Vorzugsweise wird sich eine durch die Materialentspannung der Schmelze nach Austritt derselben aus den Durchlässen des Verteilelementes bewirkte Schubkraft zu Nutze gemacht, das äußere Schleppmoment bei der Verdrehung des Verteilelementes zu unterstützen. Innerhalb des inneren Kreisringsegmentes werden die durch Durchlässe aufgeteilten Einzelschmelzströme durch die Verdrehung des Verteilelementes in radialer Richtung übereinander gelegt und innerhalb des zentralen Ringkanals zu dem Düsenspalt geführt.

Nach einer Weiterbildung der Erfindung erfasst ein Anströmkanal einen äußeren Umfangsabschnitt des Verteilelementes, so dass eine möglichst große Umfangsfläche (Angriffsfläche) des Verteilelementes von dem tangential ausgebildeten Schmelzstrom erfasst wird. Dabei reicht ein Ende des Anströmkanals bis in die Nähe des äußeren Umfanges des Verteilelementes.

Nach einer Weiterbildung der Erfindung kann die Höhe der Anströmkanäle zu der Höhe des Verteilelementes korrespondieren, vorzugsweise jedoch nimmt die Höhe der Anströmkanäle entlang des tangentialen Verlaufes der Anströmkanäle zu. Hierdurch kann eine tangential zum Umfang des Verteilelementes verlaufende Strömungsrichtung erzeugt werden.

Nach einer Weiterbildung der Erfindung wird der äußere Umfang des Verteilelementes durch mindestens einen Anströmkanal erfasst. Die Lamellen des Verteilelementes sind derart angeordnet, dass die tangential zum Rotorumfang strömende Schmelze unter Bildung eines stumpfen Winkels von dem äußeren Umfang des Verteilelementes in einen Bereich innerhalb des Verteilelementes übergeht, um anschließend über ein inneres Kreisringsegment an einen zentralen Ringkanal weitergeleitet zu werden.

Nach einer Weiterbildung der Erfindung ist der Mantel segmentiert ausgebildet, wobei Mantelsegmente und Verteilelemente aufeinandergeschichtet sind. Auf diese Weise kann insbesondere eine Koextrudierung erzeugt werden. Alternativ können die Mantelsegmente auch geteilt ausgeführt sein, um vorteilhaft die Schmelzevorverteilung in die Mantelsegmenttrennebenen zu verlegen. Hierdurch lässt sich vorteilhaft die zur Koextrusion erforderliche, werkzeugseitige Schmelzeeinleitung realisieren.

Ein Ausführungsbeispiel der Erfindung wird nachfolgend anhand der Zeichnungen näher erläutert.

Es zeigen:
- Figur 1: einen Längsschnitt durch einen Düsenkopf,
- Figur 2: einen Querschnitt durch den Düsenkopf,
- Figur 3: einen Teillängsschnitt durch einen Düsenkopf nach einer alternativen Ausführungsform,
- Figur 4: eine Draufsicht des Verteilelementes,
- Figur 5: einen Längsschnitt durch ein Verteilelement nach einer bevorzugten Ausführungsform gemäß Figur 4 und
- Figur 6: einen Längsschnitt durch einen Düsenkopf nach einer weiteren alternativen Ausführungsform.

Ein Düsenkopf 1 besteht im Wesentlichen aus einem äußeren Mantel 2 und einem inneren zylinderförmigen Dorn 4. Zusätzlich ist gemäß der Erfindung in einem Bereich zwischen dem Mantel 2 und dem Dorn 4 ein Verteilelement 6 vorgesehen, welches an seinem Umfang von Anströmkanälen 16 umgeben ist.

Insbesondere zur Ausformung von mehrschichtigen Schläuchen aber auch bei der Ummantelung von strangförmigen Halbzeugen, ist mindestens eine Zuführöffnung für die zu verteilenden Schmelzströme an der äußeren Mantelfläche des Düsenkopfes angeordnet.

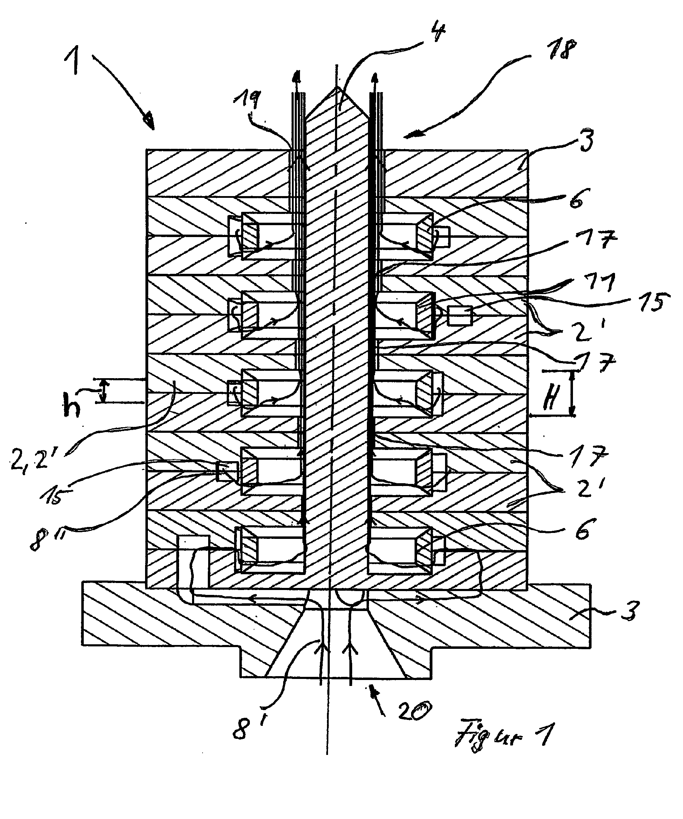

Der Düsenkopf 1 nach dem vorliegenden Ausführungsbeispiel ist in axialer Richtung segmentiert ausgebildet aus einer Mehrzahl von Mantelsegmenten 2', denen jeweils ein Verteilelement 6 zugeordnet sind. Der Düsenkopf 1 eignet sich insbesondere zur Bildung einer Koextrusion. Wie aus Figur 1 zu ersehen ist, weisen die Mantelsegmente 2' jeweils Zuführöffnungen 15 auf, von denen Anströmkanäle 16 in Richtung des Verteilelementes 6 führen. Nach dem Durchtritt eines Schmelzstromes bzw. Teilschmelzstromes 8, 8', 8'' durch die Durchlässe 7 des Verteilelementes 6 werden diese entlang eines zentralen Ringkanals 17 entlang des Dornes 4 zu einem an einer Austrittsseite 18 angeordneten Düsenspalt 19 geführt. Sowohl an der Austrittsseite 18 als auch an einer Eintrittsseite 20 des Düsenkopfes 1 sind jeweils Abschlussplatten 3 vorgesehen, die die Mantelsegmente 2' miteinander verpressen bzw. mittels dessen die Mantelsegmente 2' verschraubt sind. An einem der Eintrittsseite 20 zugewandten ersten Mantelsegment 2' wird ein erster Schmelzstrom 8' eines ersten Kunststoffes in den zentralen Ringkanal 17 geführt. In dem sich in Strömungsrichtung anschließenden Mantelsegment 2' wird die Kunststoffschmelze 8'' eines anderen Materials über eine nicht dargestellte seitlich zum Düsenkopf 1 angeordnete Eintrittsöffnung eingeleitet und unter umfänglicher Anlage an der ersten Kunststoffschmelze 8' durch den zentralen Ringkanal 17 geführt. Es können sich in Richtung des Dorns 4 weitere Mantelsegmente 2' bzw. Verteilelemente 6 anschließen, wobei weitere Schmelzströme gleichen oder unterschiedlichen Materials seitlich herangeführt werden können.

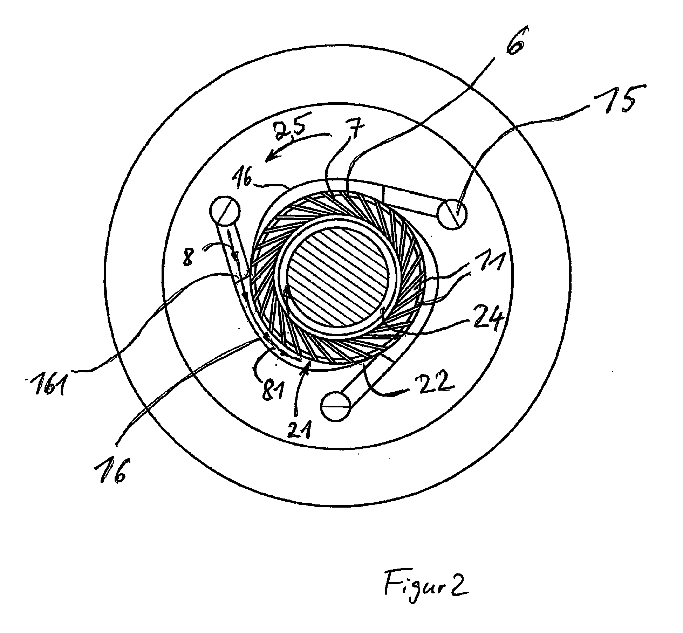

Zur Erzeugung einer homogenen Schmelze ist - wie besser aus Figur 2 zu ersehen ist - das Verteilelement 6 vorgesehen, das sich in einem radialen Abstand zu dem Dorn 4 im Bereich einer Innenfläche des Mantels 2 bzw. Mantelsegments 2' erstreckt. Das Verteilelement 6 ist vorzugsweise ringförmig angeordnet mit einer Mehrzahl von Lamellen 11, zwischen denen die Durchlässe 7 ausgebildet sind. Die Lamellen 11 können nach innen verjüngend ausgebildet sein. Vorzugsweise laufen die Lamellen 11 zum Inneren des Verteilelementes 6 spitz oder abgerundet zu, wodurch Totzonen mit den damit verbundenen negativen Auswirkungen wie z.B. hohe Verweilzeiten, Verwirbelungen etc. vermieden werden. Dabei können die die Durchlässe 7 bildenden Flächen der Lamellen 11 eben oder konvexförmig ausgebildet sein. Der Querschnitt der Durchlässe 7 kann in Strömungsrichtung abnehmen oder konstant sein. Eine Grundfläche 71 der Durchlässe 7 kann eben oder mit einem Radius versehen und/oder waagerecht oder zum inneren Umfang des Verteilelementes 6 hin geneigt ausgeführt sein.

Wie aus Figur 2 zu ersehen ist, sind dem Verteilelement 6 drei Anströmkanäle 16 derart zugeordnet, dass sich jeweils eine tangential zu einer Verteilelementumfangfläche 21 verlaufende Schleppströmung 81 ausbildet. Der Anströmkanal 16 erstreckt sich derart, dass der Umfangsabschnitt 21 des Verteilelementes 6 von demselben erfasst wird. Im vorliegenden Ausführungsbeispiel überstreicht der von dem Anströmkanal 16 erfasste Umfangsabschnitt 21 einen Winkel von etwa 120°. Der Anströmkanal 16 verengt sich in radialer Richtung im Bereich des Umfangsabschnitts 21 des Verteilelementes 6, bis das Ende 22 des Anströmkanals 16 in die Nähe des äußeren Umfangs des Verteilelementes 6 reicht, ohne dessen äußeren Umfang zu berühren. Das Ende 22 des Anströmkanals 16 reicht bis unmittelbar in die Nähe eines folgenden Anströmkanals 16'. Hierdurch wird die Schleppwirkung der zum Verteilelement 6 tangential verlaufenden Schmelzströmung 81 auf eine maximale Umfangsfläche 21 des Verteilelementes 6 übertragen, wodurch das über die wandhaftende Schmelzströmung 81 am Verteilelementumfang 21 erzeugte Schleppmoment maximiert wird. Zusätzlich ist eine homogenere Zuführung des Teilschmelzstromes 8 zu dem äußeren Umfangsbereich des Verteilelementes 6 gewährleistet.

Die maximale Höhe H des Anströmkanals 16, die vorzugsweise am Ende 22 des Anströmkanals 16 erreicht wird, korrespondiert zu der Höhe H des Verteilelementes 6. Vorzugsweise nimmt die Anströmkanalshöhe h, vom Einströmpunkt 161 des Anströmkanals 16 ausgehend, bis hin zum Ende 22 des Anströmkanals 16 auf die Höhe H des Verteilelementes 6 zu. Durch das stetige Öffnen von einer anfänglichen Anströmkanalhöhe h bis hin zur Anströmkanalhöhe H am Ende 22 des Anströmkanals 16 wird zum einen die das zur Verdrehung des Verteilelementes 6 erforderliche, Schleppmoment hervorrufende, tangential zum Umfangsabschnitt 21 des Verteilelementes 6 verlaufende Schleppströmung 81 in günstiger Weise verstärkt und zum anderen eine besonders homogene Schmelzverteilung erreicht. Die bis in die Nähe des Verteilelementes 6 reichende, innere Mantelfläche ober- bzw. unterhalb des Anströmkanals 16 ist bevorzugter Weise geneigt und/oder abgerundet ausgeführt, wodurch in vorteilhafter Weise eine Optimierung im Hinblick auf zu vermeidende Totzonen erreicht wird.

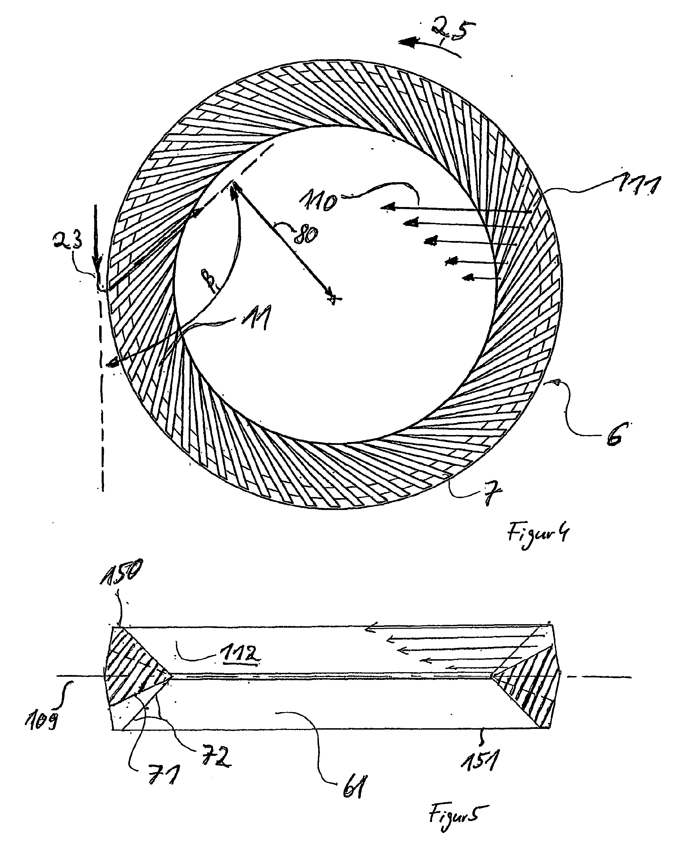

Die Lamellen 11 des Verteilelementes 6 sind derart in gleicher Weise geneigt ausgebildet, dass Teilschmelzströme 23 unter Überstreichen eines stumpfen Winkels ß aus dem Anströmkanal 16 durch die Durchlässe 7 in den inneren Hohlraum 24 des Düsenkopfes 1 umgelenkt werden. Durch eine derartige Anordnung der Durchlässe 7 wird die am Durchlassaustritt 72 durch die Schmelzentspannung hervorgerufene Kraftwirkung mit einem Hebelarm 80 gemäß Figur 4 zur Erzeugung eines Schubdrehmomentes genutzt, was die Verdrehung des Verteilelementes 6 in Richtung 25 um die Längsachse des Dorns 4 unterstützt. Ein Antriebsmoment wird durch die von den Anströmkanälen 16 hervorgerufene, zum Umfang des Verteilelementes 6 tangential verlaufende Schmelzströmung über die Schleppwirkung der wandhaftenden Schmelze erzeugt.

Die Grundfläche 71 der Durchlässe 7 nach Figuren 4 und 5 kann eben oder mit einem Radius versehen und in seinem Verlauf vom äußeren zum inneren Radius des als Kreisring ausgebildeten Verteilelementes 6 waagerecht oder geneigt ausgeführt sein. Figuren 4 und 5 zeigen eine bevorzugte Ausführungsform des Verteilelementes 6 mit einem derart geneigten Durchlassgrund 71, dass der gesamte Innenbereich 61 des Verteilelementes 6 für den Austritt der Durchlässe 7 genutzt wird. Hierdurch wird die an dem Durchlassaustritt 72 vorherrschende, das die Verdrehung des Verteilelementes 6 positiv unterstützende Schubmoment erzeugende Kraftwirkung auf die gesamte Innenfläche des Verteilelementes 6 ausgedehnt. Gleichzeitig kann die bremsmomenterzeugende, innere Mantelfläche des Verteilelementes 6 auf ein Minimum reduziert werden.

Die Lamellen 11 können geradlinig oder bogenförmig ausgebildet sein. Die Lamellen 11 können in Umfangsrichtung die gleiche Form aufweisen oder in regelmäßigen Abständen unterschiedlich geformt ausgebildet sein.

Die Schmelze kann beispielsweise aus einem thermoplastischen Material gebildet sein.

Die Verteilwirkung der vorliegenden Erfindung kann auch für weitere fließfähige Medien verwendet werden.

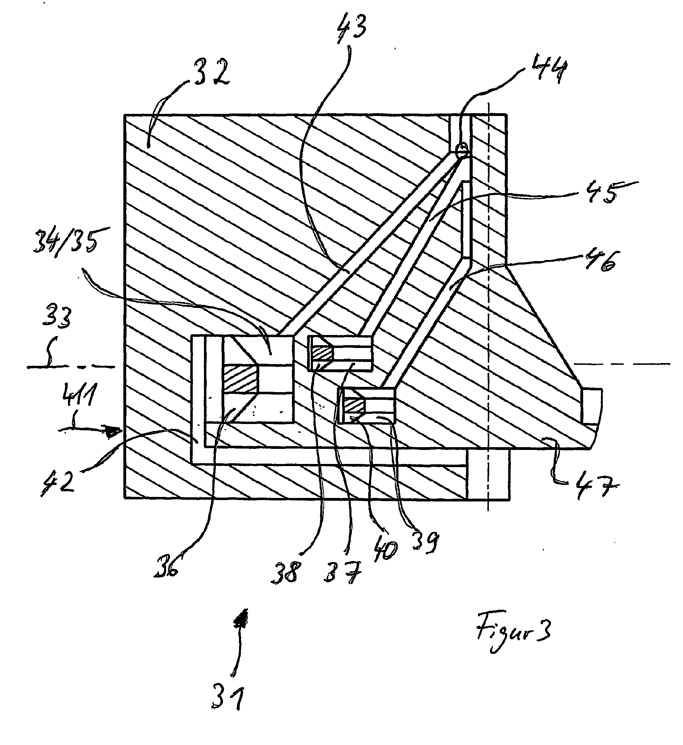

Nach einer alternativen Ausführungsform eines Düsenkopfes 31 gemäß Figur 3 zur Bildung einer Koextrusion kann ein Mantelsegment 32 eine Mehrzahl von sich in einer Radialebene 33 sich erstreckende ringförmige Hohlraumkammern 34 aufweisen. Beispielsweise kann eine äußere Hohlraumkammer 35 vorgesehen sein, in der sich ein Verteilelement 36 mit einem relativ großen Radius erstreckt. In radialer Richtung nach innen erstreckt sich ein erster innerer Hohlraum 37 mit einem ersten inneren Verteilelement 38 sowie ein axial versetzter zweiter innerer Hohlraum 39 mit einem zweiten inneren Verteilelement 40. Die Verteilelemente 36, 38, 40 können der Form des Verteilelementes 6 nach der Ausführungsform gemäß Figuren 4 und 5 entsprechen.

In die äußere Hohlraumkammer 35 wird die Kunststoffschmelze über eine axiale Eintrittsöffnung 41 und einen sich daran anschließenden Eintrittskanal 42 zugeführt. Die entsprechenden Eintrittskanäle der anderen Hohlraumkammern 37 und 39 verlaufen in gleicher Weise rotationssymmetrisch in Umfangsrichtung um die Kreisringelemente 38, 40. Die Eintrittsöffnungen sind jedoch in einem unterschiedlichen Umfangsbereich des Mantelsegmentes 32 angeordnet. Jeder Hohlraumkammer 34, 37, 39 ist mindestens eine Eintrittsöffnung zugeordnet, von der sich symmetrisch bezüglich einer Längsmittelebene des Düsenkopfes 31 oder rotationssymmetrisch die Eintrittskanäle 42 verzweigen. Eine gleichmäßige Zuführung der Kunststoffschmelze in die entsprechenden Hohlraumkammern 35, 37, 39 ist erforderlich, damit eine Selbstzentrierung der Kreisringelemente 36, 38, 40 gewährleistet ist. Die Vorverteilung eines Schmelzstromes, der seitlich über eine an dem Umfangsbereich des Mantelsegmentes 32 angeordnete Eintrittsöffnung zugeführt wird, kann z.B. erfolgen über Hirschgeweihverteiler, Pinolenverteiler etc..

Das Verteilelement ist als Kreisringelement mit radialen Durchlässen ausgebildet und leitet den Schmelzstrom in ein inneres Kreisringsegment, wo der Schmelzstrom in axialer Richtung innerhalb des zentralen Ringkanals zu dem Düsenspalt geführt wird.

Für eine punktförmige Zusammenführung der Kunststoffschmelze für die Koextrusion ist der äußeren Hohlraumkammer 35 ein erster Auslasskanal 43 zugeordnet, der sich von einem der inneren Seite des Kreisringelementes 36 zugewandten Abschnitts der äußeren Hohlraumkammer 35 zu einer ringförmigen Verbindungsstelle 44 erstreckt. An diese ringförmige Verbindungsstelle 44 mündet ein zweiter Auslasskanal 45, der sich von der Innenseite der ersten inneren Hohlraumkammer 37 erstreckt. Ein von der zweiten inneren Hohlraumkammer 39 führender dritter Auslasskanal 46 mündet ebenfalls in die ringförmige Verbindungsstelle 44, so dass dort eine Übereinanderschichtung von unterschiedlichen Kunststoffschmelzen erfolgen kann.

Vorteilhaft kann hierdurch eine Koextrusion platzsparend erfolgen, da die Hohlraumkammern 35, 37, 39 im wesentlichen in einer Radialebene 33 angeordnet sind. Die Hohlraumkammern 35, 37, 39 sind jeweils kreisringförmig ausgebildet, in denen jeweils ein einziges Kreisringelement 36, 38, 40 angeordnet ist.

Im vorliegenden Ausführungsbeispiel weist der Düsenkopf 31 einen sich zu der axial in Eintrittsöffnung 41 sich verbreiternden Dorn 47 auf, in dem die inneren Hohlraumkammern 37 und 39 sowie die jeweils zugeordneten Kreisringelemente 38 und 40 sowie die Auslasskanäle 45, 46 angeordnet sind. Der Dorn 47 kann alternativ segmentiert ausgebildet sein.

Nach einer bevorzugten Ausführungsform des Verteilelementes 6 gemäß Figuren 4 und 5 ist das als Rotor fungierende Verteilelement 6 als Kreisringelement ausgeführt und an seiner inneren Ringfläche 112 angefast ausgebildet. Das Verteilelement 6 weist somit sich radial nach außen verbreiternde Lamellen 107 auf. Das Verteilelement 6 ist im Querschnitt konusförmig ausgebildet. Das Verteilelement 6 kann symmetrisch zu einer Längsmittelebene 109 derselben ausgebildet sein. Durch die Anfasung erfolgt eine breitere Verteilung von Einzelschmelzströmen 110, vorzugsweise in radialer und/oder axialer Richtung. Die Einzelschmelzströme verlassen einen Kanal 111 des Verteilelementes 6 vor Erreichen der inneren Ringfläche 112 des Verteilelementes 6. Dabei erfahren die Einzelschmelzströme 110 eine Verteilung in axialer und/oder radialer Richtung. Die austretenden Einzelschmelzströme 110 können somit breiter in radialer und axialer Richtung und damit effektiver ausgebildet werden. Hierdurch kann der durch die Rotorverdrehung hervorgerufene Effekt der Bindenahtverwischung und der Materialhomogenisierung zusätzlich verstärkt werden. Außerdem wird der Druckverbrauch am Verteilelement 6 erheblich vermindert. Es ergibt sich somit eine vielschichtige Schmelzstromverwischung. Auf Grund des geringeren Widerstandes ist die Geschwindigkeit der zu der Mittelebene 109 entfernt angeordneten Einzelschmelzströme 110 größer als die entlang des Durchlassgrundes 71 fließenden Einzelschmelzströme 110. Die Lamellen 11 auf einer ersten Stirnseite 150 und einer gegenüberliegenden Stirnseite 151 des Verteilelementes 6 sind derart versetzt angeordnet, dass sich jeweils eine Lamelle 107 über einem Durchlass 7 befindet. Vorzugsweise laufen die Lammellen 107 zum Verteilelementinneren spitz zu bzw. sind mit einer Abrundung versehen. Durch die derartige Gestaltung und Anordnung der Lamellen 107 lässt sich im Hinblick auf eine hohe Extrudatqualität eine erhebliche Verbesserung der Halbzeugeigenschaften erzielen, z.B. bindenahtfreie Rohre und Folien, verbesserte mechanische und optische Eigenschaften der Extrudate.

Die Kanäle 111 können bogenförmig oder abgerundet ausgeführt sein. Etwaige scharfe Kanten des Kanals 111 können abgerundet ausgebildet sein. Alle Flächen des Verteilelementes 6 können als gekrümmte Flächen ausgebildet sein; die Ringwandstärke, der Durchmesser und die Höhe des Verteilelementes 6 sind variierbar.

Die Wandstärke, der Durchmesser und die Höhe des vorzugsweise als Kreisringelement ausgebildeten Verteilelementes 6 sind derart variierbar, dass die Summe der verteilelementantreibenden Drehmomente, bestehend aus den Schlepp- und Schubdrehmomenten, größer ist als die durch die Schmelzeviskosität an dem Verteilelement hervorgerufenen Reibmomente.

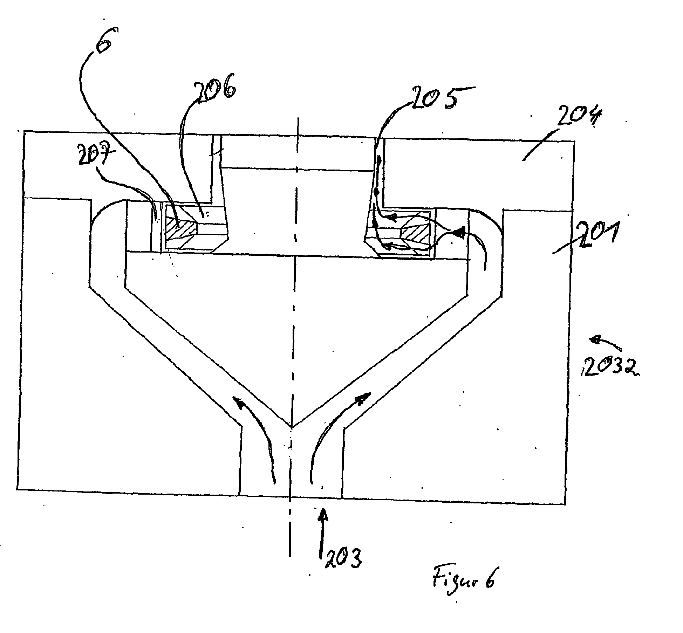

Nach einer alternativen Ausführungsform des Düsenkopfes 2032 gemäß Figur 6 zur Schlauchextrusion von thermisch sensiblen Schmelzen wie z.B. PVC, kann ein Mantelsegment 201 einen Verdrängerkörper 202 enthalten, der auf seiner der Schmelzeeintrittsöffnung 203 zugewandten Seite kegel- oder torpedoförmig ausgebildet ist. An einer der Eintrittsöffnung 203 gegenüber liegenden Deckelplatte 204 stützt sich der Verdrängerkörper 202 ab. In der dem Düsenaustritt 205 zugewandten Seite des Verdrängerkörpers 202 erstreckt sich eine ringförmige Hohlraumkammer 206, in welcher wiederum ein Verteilelement 6 nach Figur 4 und Figur 5 angeordnet ist. Durch eine zu den Anströmkanälen 16 ähnliche Gestaltung einer Vielzahl von schmelzführenden Anströmkanälen 207 und des Verteilelementes 6 werden zur Verdrehung des Verteilelementes 6 ebenfalls die sich durch die günstig gestaltete Schmelzstromführung einstellenden Schlepp- und Schubdrehmomente genutzt.

Die Schmelzeanströmung kann von außen und/oder von innen an das Verteilelement herangeführt werden. Dabei wird eine in radialer Richtung äußere Außenumfangsfläche und/oder in radialer Richtung innere Innenumfangsfläche des Verteilelements mit der Schmelze beaufschlagt.

## Patentansprüche

1. Düsenkopf für einen Extruder mit einem äußeren Mantel (2), mit einem inneren zylinderförmigen Dorn (4), mit einem ringförmigen Düsenspalt an einer Austrittsseite, mit zumindest einer Zuführöffnung (15) für die Schmelze, mit mindestens einem Verteilelement (6) zur Verteilung der Schmelze in einen in den Düsenspalt übergehenden zentralen Ringkanal (17), dass das Verteilelement (6) und ein Anströmkanal (16) vorgesehen sind, so dass das Verteilelement (6) infolge der Schmelzanströmung in Verdrehung um die Längsachse des Dorns (4) versetzt wird und dass sich eine tangentiale Strömung der Schmelze an einer Umfangsfläche (21) des Verteilelementes (6) einstellt und dass der Schmelzstrom (8, 8', 8") in dem zentralen Ringkanal (17) geführt wird, **dadurch gekennzeichnet, dass** das Verteilelement (6) eine Mehrzahl von Lamellen (11) und zwischen denselben angeordneten Durchlässen (7) aufweist, so dass sich durch die Strömung der Schmelze (8, 8', 8'') eine Kraftwirkung einstellt zur Verdrehung des Verteilelementes (6).

2. Düsenkopf nach Anspruch 1, **dadurch gekennzeichnet, dass** die Durchlässe (7) derart orientiert sind, dass eine Strömungsrichtung der Schmelze (8, 8', 8'') am Austritt des Durchlasses (7) in einem radialen Abstand zu der Mittelachse des Dorns (4) verläuft.

3. Düsenkopf nach Anspruch 1 oder 2, **dadurch gekennzeichnet, dass** die Durchlässe (7) derart orientiert sind, dass die Schmelze um einen stumpfen Winkel (β) an dem Eintritt der Durchlässe umgelenkt wird, so dass sich die um Drehsinn (25) gleichgerichteten Schlepp- und Schubdrehmomente zu einem Gesamtdrehmoment addieren.

4. Düsenkopf nach einem der Ansprüche 1 bis 3, **dadurch gekennzeichnet, dass** die Höhe (h) des Anströmkanals in Strömungsrichtung der Schmelze zunimmt.

5. Düsenkopf nach einem der Ansprüche 1 bis 4, **dadurch gekennzeichnet, dass** die Lamellen (11) zum inneren Hohlraum (24) spitz oder abgerundet zulaufen.

6. Düsenkopf nach einem der Ansprüche 1 bis 5, **dadurch gekennzeichnet, dass** ein Ende eines ersten Anströmkanals (16) bis zu einem nächstfolgenden Anströmkanal (16') angeordnet ist.

7. Düsenkopf nach einem der Ansprüche 1 bis 6, **dadurch gekennzeichnet, dass** das Verteilelement (6) an einer inneren Ringfläche (11) angefast.

8. Düsenkopf nach einem der Ansprüche 1 bis 7, **dadurch gekennzeichnet, dass** die Lamellen (11) und die Durchlässe an gegenüberliegenden Stirnseiten (150, 151) des Verteilelementes (6) jeweils versetzt angeordnet sind.

9. Düsenkopf nach einem der Ansprüche 1 bis 8, **dadurch gekennzeichnet, dass** der Mantel (2) durch eine Mehrzahl von Mantelsegmenten (2') gebildet ist, den jeweils ein Verteilelement (6) zugeordnet ist und dass die Mantelsegmente (2') um die Verteilelemente (6) aufeinandergeschichtet sind und dass jedem Mantelsegment (2') mindestens ein Anströmkanal (16) zugeordnet ist.

10. Düsenkopf nach einem der Ansprüche 1 bis 9, **dadurch gekennzeichnet, dass** das Verteilelement (36, 38, 40) in einem ringförmigen Hohlraum (34, 35, 37, 39) angeordnet ist.

11. Düsenkopf nach einem der Ansprüche 1 bis 10, **dadurch gekennzeichnet, dass** das Verteilelement (6) als ein Kreisringelement ausgebildet ist.

12. Düsenkopf nach einem der Ansprüche 1 bis 11, **dadurch gekennzeichnet, dass** das Verteilelement (6) in einem torpedo- oder kegelförmigen Verdrängerkörper (202) angeordnet ist, wobei die Schmelze auf eine Spitze des Verdrängerkörpers trifft und dann der Schmelzstrom ringförmig aufgeteilt wird.

13. Düsenkopf nach einem der Ansprüche 1 bis 12, **dadurch gekennzeichnet, dass** die Umfangsfläche des Verteilelementes, an der sich die tangentiale Strömung einstellt, als eine Außenumfangsfläche desselben ausgebildet ist.

14. Düsenkopf nach einem der Ansprüche 1 bis 13, dadurch ge- /3 kennzeichnet, dass die Umfangsfläche des Verteilelements, an der sich die tangentiale Strömung einstellt, als eine Innenumfangsfläche desselben ausgebildet ist.

15. Düsenkopf nach einem der Ansprüche 1 bis 14, **dadurch gekennzeichnet, dass** das Verteilelement (6) eine Mehrzahl von Lamellen (11) und zwischen denselben angeordneten Durchlässen aufweist, derart, dass sich durch die Materialsentspannung der Schmelze am Austritt durch Durchlässe eine Kraftwirkung einstellt.

## Claims

1. Nozzle head for an extruder having an outer jacket (2), a cylindrical inner mandrel (4), an annular die gap on an outlet side, at least one feed opening (15) for the melt, and at least one distribution element (6) for distributing the melt into a central ring channel (17) that extends into the die gap wherein the distribution element (6) and a feed runner (16) are provided such that the incoming melt stream causes the distribution element (6) to turn around the longitudinal axis of the mandrel (4), wherein a tangential flow of the melt is generated at a circumferential surface (21) of the distribution element (6) and wherein the melt stream (8, 8', 8") is directed into said central ring channel (17), **characterized in that** the distribution element (6) has a plurality of blade members (11) and of passages (7) therebetween such that the flow of the melt (8, 8', 8") generates a force causing the distribution element (6) to turn.

2. Nozzle head for an extruder according to Claim 1, **characterized in that** said passages (7) are oriented in such a way that the direction of flow of the melt (8, 8', 8") extends at the outlet from the passage (7) a radial distance away from the centerline of the mandrel (4).

3. Nozzle head for an extruder according to Claim 1 or 2,
**characterized in that** the passages are oriented in such a way that the melt is deflected under an obtuse angle (*β*) at the inlet to the passages so that the drag and shear torques rectified in their senses of rotation (25) are adding up to a total torque.

4. Nozzle head for an extruder according to any of the preceding Claims 1 to 3, **characterized in that** the height (h) of the feed runner increases in melt flow direction.

5. Nozzle head for an extruder according to any of the preceding Claims 1 to 4, **characterized in that** the blade members (11) are either pointed or rounded toward an inner cavity (24).

6. Nozzle head for an extruder according to any of the preceding Claims 1 to 5, **characterized in that** one end of a first feed runner (16) extends right up to a next feed runner (16').

7. Nozzle head for an extruder according to any of the preceding Claims 1 to 6, **characterized in that** the distribution element (6) is chamfered to an inner ring surface (11).

8. Nozzle head for an extruder according to any of the Claims 1 to 7, **characterized in that** the blades (11) and the passages are arranged on opposing head ends (150, 151) of the distribution element (6) in staggered relation each.

9. Nozzle head for an extruder according to any of the preceding Claims 1 to 8, **characterized in that** the jacket (2) is formed by a plurality of jacket segments (2') to each of which a distribution element is assigned, that said jacket segments (2') are stacked around said distribution elements (6) and that at least one feed runner (16) is assigned to each of the jacket segments (2')

10. Nozzle head for an extruder according to any of the preceding Claims 1 to 9, **characterized in that** the distribution element (36, 38, 40) is disposed inside an annular cavity (34, 35, 37, 39).

11. Nozzle head for an extruder according to any of the preceding Claims 1 to 10, **characterized in that** the distribution element (6) is a circular ring element.

12. Nozzle head for an extruder according to any of the preceding Claims 1 to 11, **characterized in that** the distribution element (6) is disposed inside a torpedo or cone shaped displacer (202) for the melt to first hit a point of said displacer and thereafter to be distributed into an annular stream.

13. Nozzle head for an extruder according to any of the Claims 1 to 12, **characterized in that** the circumferential surface of the distribution element at which a tangential flow is generated is an outer circumferential surface.

14. Nozzle head for an extruder according to any of the Claims 1 to 13, **characterized in that** the circumferential surface of the distribution element at which a tangential flow is generated is an inner circumferential surface.

15. Nozzle head for an extruder according to any of the preceding Claims 1 to 14, **characterized in that** the distribution element (6) is provided with a plurality of blades (11) and of passages therebetween such that a force is generated at the outlets from said passages due to material stress relief of the melt.

## Revendications

1. Tête de filière, qui, destinée à une extrudeuse, est dotée d'un fourreau extérieur (2), d'un mandrin intérieur, cylindrique (4), d'un intervalle de filière. sur une face de sortie, d'au moins une ouverture d'alimentation (15) pour la matière en fusion, d'au moins un élément de répartition (6) pour la répartition de la matière en fusion dans un canal annulaire, central (17), raccordé à l'intervalle de filière, sachant que l'élément de répartition (6) et un canal d'admission (16) sont agencés de sorte telle que l'élément de répartition (6) est mis en rotation, par le flux de matière en fusion, autour d'un axe longitudinal du mandrin (4) et que s'établit un flux de matière en fusion tangentiel sur une surface périphérique (21) de l'élément de répartition (6) et que le flux de matière en fusion (8, 8', 8") est conduit dans le canal annulaire, central (17), **caractérisée en ce que** l'élément de répartition (6) est doté d'une pluralité de lamelles (11) et de passages, qui sont agencés entre celles-ci, de sorte qu'un effet dynamique se développe sous l'effet de l'écoulement du flux de matière en fusion (8, 8', 8"), à la sortie des passages (7), pour faire tourner l'élément de répartition (6).

2. Tête de filière selon la revendication 1, **caractérisée en ce que** les passages (7) sont orientés de sorte qu'une direction d'écoulement de la matière en fusion (8, 8', 8") s'étende, à la sortie du passage (7), à un intervalle radial de l'axe médian du mandrin (4).

3. Tête de filière selon revendication 1 ou 2, **caractérisée en ce que** les passages (7) sont orientés de sorte que la matière en fusion dévie, à l'entrée des passages (7), sur un angle obtus (β), de sorte que les couples d'entraînement et de poussée, agissant dans le même sens de rotation (25), s'additionnent en un couple de rotation global.

4. Tête de filière selon l'une des revendications 1 à 3, **caractérisée en ce que** la hauteur (h) du canal d'admission augmente dans la direction d'écoulement de la matière en fusion.

5. Tête de filière selon l'une des revendications 1 à 4, **caractérisée en ce que** les lamelles (11) s'étendent en pointe ou en arrondi vers l'intérieur de la cavité (24).

6. Tête de filière selon l'une des revendications 1 à 5, **caractérisée en ce qu'**une extrémité d'un premier canal d'admission (16) est agencé jusqu'au canal d'admission suivant (16').

7. Tête de filière selon l'une des revendications 1 à 6, **caractérisée en ce que** l'élément de répartition (6) est chanfreiné sur une face annulaire (11) intérieure.

8. Tête de filière selon l'une des revendications 1 à 7, **caractérisée en ce que** les lamelles (11) et les passages sont disposés, respectivement décalés, sur des faces frontales (150, 151) de l'élément de répartition (6).

9. Tête de filière selon l'une des revendications 1 à 8, **caractérisée en ce que** le fourreau (2) est formée par une pluralité de segments de fourreau (2'), à chacun desquels est associé un élément de répartition (6) et que les segments de fourreau (2') sont empilés les uns sur les autres autour des éléments de répartition (6) et qu'au moins un canal d'admission (16) est associé à chacun des segments de fourreau (2').

10. Tête de filière selon l'une des revendications 1 à 9, **caractérisée en ce que** l'élément de répartition (36, 38, 40) est disposé dans une cavité annulaire (34, 35, 37, 39).

11. Tête de filière selon l'une des revendications 1 à 10, **caractérisée en ce que** l'élément de répartition (6) est réalisé sous la forme d'un élément annulaire, circulaire.

12. Tête de filière selon l'une des revendications 1 à 11, **caractérisée en ce que** l'élément de répartition (6) est agencé dans un corps de refoulement (202) en forme de torpille ou de cône, sachant que la matière en fusion heurte le corps de refoulement et que le flux de matière en fusion est alors réparti en circuit fermé.

13. Tête de filière selon l'une des revendications 1 à 12, **caractérisée en ce que** la surface périphérique de l'élément de répartition, que suit le flux tangentiel, forme une surface périphérique extérieure de celui-ci.

14. Tête de filière selon l'une des revendications 1 à 13, **caractérisée en ce que** la surface périphérique de l'élément de répartition, que suit le flux tangentiel, forme une surface périphérique intérieure de celui-ci.

15. Tête de filière selon l'une des revendications 1 à 14, **caractérisée en ce que** l'élément de répartition (6) présente une pluralité de lamelles (11) et de passages, disposés entre celles-ci, de sorte qu'un effet dynamique s'établit, en raison de la relaxation des contraintes de la matière en fusion, à la sortie des passages.
